# EUROPÄISCHE PATENTSCHRIFT

(11) **EP 0 651 174 B1**
(45) Veröffentlichungstag und Bekanntmachung des Hinweises auf die Patenterteilung: **16.12.1998**
(21) Anmeldenummer: 94115256.3
(22) Anmeldetag: 28.09.1994
(51) Int. Cl.: F16F 9/46, B60G 17/08

(54) **Regelbarer Schwingungsdämpfer für Kraftfahrzeuge**
Controllable vibration damper for motor vehicles
Amortisseur réglable pour véhicules

(30) Priorität: 29.10.1993 DE 4336950
(43) Veröffentlichungstag der Anmeldung: 03.05.1995
(73) Patentinhaber: Krupp Bilstein GmbH, 58256 Ennepetal (DE); DAIMLER-BENZ AKTIENGESELLSCHAFT, 70567 Stuttgart (DE)
(72) Erfinder: Huang, Zhen, Dr., D-42389 Wuppertal (DE); Schmidt, Klaus, Dipl.-Ing., D-51467 Bergisch Gladbach (DE); Scheerer, Hans, Dipl.-Ing., D-73734 Esslingen (DE); Opara, Andreas, Dipl.-Ing., D-70736 Fellbach (DE)
(74) Vertreter: John, Ernst

(56) Entgegenhaltungen:
- DE-C- 4 125 316
- US-A- 4 746 106
- US-A- 5 180 039

## Beschreibung

Die Erfindung betrifft einen regelbaren Schwingungsdämpfer, bestehend aus einem mit Dämpfungsflüssigkeit gefüllten Dämpferzylinder, in dem ein mit einer Kolbenstange verbundener, mit druckabhängigen Ventilen für die Zug- und Druckstufe versehener Dämpfungskolben gleitet, der den Dämpferzylinder in zwei Arbeitsräume unterteilt, und der mit einem regelbaren äußeren Dämpfungsventilsystem zur Einstellung der Dämpfungskraft des Schwingungsdämpfers versehen ist, das in Verbindung mit den druckabhängigen Ventilen am Dämpfungskolben des Schwingungsdämpfers in Zugund Druckstufe vier Kennlinien der Dämpfungskraft ermöglicht, wobei das mit zwei Strömungsanschlüssen versehene Dämpfungsventilsystem Dämpfungsventile aufweist, die aus je einem druckabhängigen Ventil für Zug- und Druckstufe und je einem elektromagnetisch ansteuerbaren, mit mindestens einem Durchlaß zusammenarbeitenden, axial beweglichen Steuerschieber bestehen, wobei die Dämpfungsventile koaxial gegeneinander in einem im wesentlichen zylinderförmigen Ventilgehäuse angeordnet und über Strömungskanäle miteinander verbindbar sind.

In der Deutschen Offenlegungsschrift DE 42 16 987 Al ist der Aufbau eines derartigen Schwingungsdämpfers gezeigt. Bei dem bekannten Schwingungsdämpfer weist das Dämpfungsventilsystem nur radial angeordnete Strömungsanschlüsse auf. Dies hat den Nachteil, daß aus Platzmangel im Fahrzeug solche Strömungsanschlüsse nur schwer realisierbar sein können.

In der US-A-4 746 106 wird ein Druckspeicher gezeigt, der über einen, daran axial angeordneten Anschluß mit dem Innenraum eines Stoßdämpfers verbunden ist. Diese Schrift gibt jedoch keine Anregungen zur Gestaltung eines gattungsgemäßen äußeren Dämpfungsventilsystems.

Die Aufgabe der Erfindung ist es, die Strömungsanschlüsse des Dämpfungsventilsystems derart vorzusehen, daß das Dämpfungsventilsystem je nach Anwendungsfall auf einfache Weise als Bypaßventil oder in einer Niveauregelung mit dem Schwingungsdämpfer oder der Niveauregeleinrichtung verbunden und auch an einer solchen Stelle im Fahrzeug angeordnet werden kann, an der aus Platzgründen das bekannte Dämpfungsventilsystem nicht eingesetzt werden kann.

Die Aufgabe der Erfindung wird durch die kennzeichnenden Merkmale des Patentanspruches gelöst, wobei die Unteransprüche vorteilhafte Ausführungen darstellen.

Erfindungsgemäß weist das Dämpfungsventilsystem zwei axiale Strömungsanschlüsse für die Dämpfungsflüssigkeit, die parallel zur Achse des Dämpferzylinders verlaufen, auf, welche über die jeweilige Stirnseite des Ventilgehäuses axial in das Dämpfungsventilsystem geführt sind, und jeder der die Steuerschieber bewegenden Elektromagnete ist axial zentral von dem jeweiligen Strömungsanschluß oder einem mit dem jeweiligen Strömungsanschluß verbundenen Strömungskanal durchdrungen oder ist axial mantelförmig von einem Ringkanal zum Leiten der Dämpfungsflüssigkeit umgeben.

Eine Ausführung des Dämpfungsventilsystems sieht vor, daß einer der Strömungsanschlüsse eine direkte Verbindung zu einem der druckabhängigen Ventile und einem der gesteuerten Durchlässe und der weitere Strömungsanschluß eine direkte Verbindung zu dem weiteren druckabhängigen Ventil und dem weiteren gesteuerten Durchlaß aufweist.

In einer weiteren vorteilhaften Ausgestaltung der Erfindung sind die elektromagnetisch ansteuerbaren, mit mindestens einem Durchlaß zusammenarbeitenden, axial beweglichen Steuerschieber axial außen und die druckabhängigen Ventile axial innen im Ventilgehäuse angeordnet.

Bei dieser Ausführungsform des Dämpfungsventilsystems kann mindestens einer der Steuerschieber mit seinem elektromagnetischen Antrieb um den Strömungsanschluß angeordnet sein oder mindestens einer der Strömungsanschlüsse radial um den Steuerschieber und seinen elektromagnetischen Antrieb geführt sein.

Eine andere vorteilhafte Ausgestaltung der Erfindung besteht darin, daß die elektromagnetisch ansteuerbaren, mit mindestens einem Durchlaß zusammenarbeitenden, Steuerschieber axial innen und die druckabhängigen Ventile axial außen im Ventilgehäuse angeordnet sind. Diese Anordnung der Dämpfungsventile hat insbesondere den Vorteil, daß die elektrischen Anschlüsse der elektromagnetischen Antriebe über eine gemeinsame Steckverbindung nach außen geführt werden können.

Bei dieser Ausführungsform des Dämpfungsventilsystem ist beispielsweise der die beiden koaxial gegeneinander angeordneten Dämpfungsventile verbindende Strömungskanal durch die ringförmig ausgebildeten Ventilschieber und ihre elektromagnetischen Antriebe hindurchgeführt.

Die Strömungsanschlüsse können bei allen Ausbildungen des Dämpfungsventilsystems vorteilhafterweise in Zug- und Abströmrichtung beaufschlagt werden.

Die Erfindung wird nachfolgend anhand mehrerer Ausführungsbeispiele näher erläutert. Die zugehörigen Zeichnungen zeigen:
- Fig. 1: einen Schwingungsdämpfer mit einem Dämpfungsventilsystem mit zwei axialen Strömungsanschlüssen,
- Fig. 2: eine Ausführungsform des Dämpfungsventilsystems, bei dem die elektromagnetisch ansteuerbaren Steuerschieber axial außen und die druckabhängigen Ventile axial innen angeordnet sind,
- Fig.3: eine weitere Ausführungsform des Dämpfungsventilsystems,
- Fig. 4: eine dritte Ausführungsform des Dämpfungsventilsystems,
- Fig. 5: eine Ausführungsform des Dämpfungsventilsystems, bei dem die druckabhängigen Ventile axial außen und die elektromagnetisch ansteuerbaren Steuerschieber axial innen angeordnet sind und

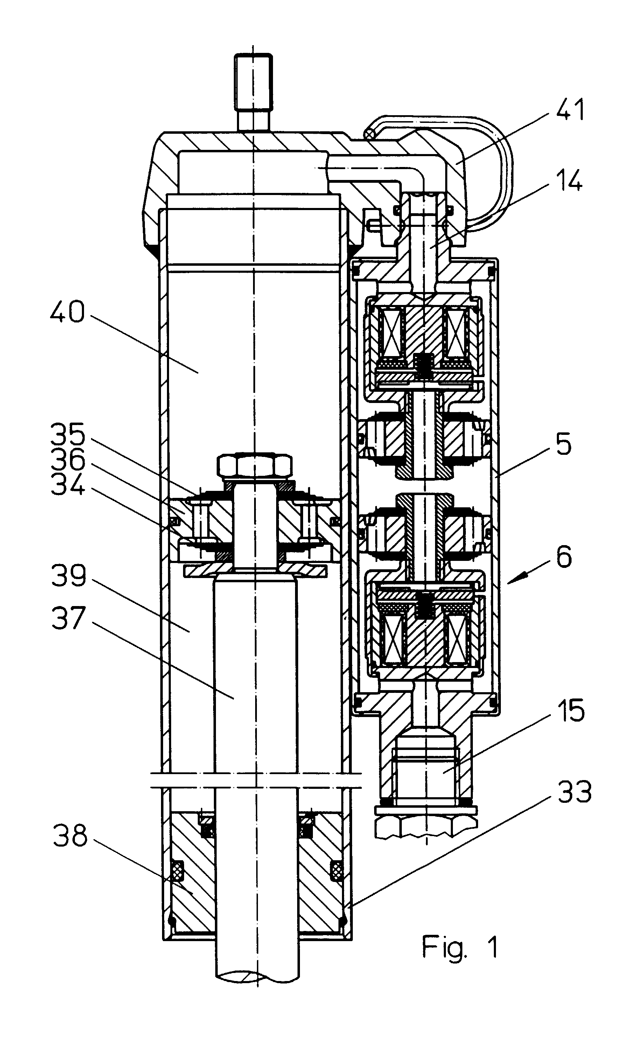

In Fig. 1 ist ein regelbarer Einrohrschwingungsdämpfer gezeigt, der im wesentlichen aus einem Dämpferzylinder 33 und einer in dem Dämpferzylinder eintauchenden, in einem mit druckabhängigen Ventilen 34, 35 ausgestatteten Dämpfungskolben 36 endenden Kolbenstange 37, die durch die Führungs- und Dichtungseinheit 38 im Dämpferzylinder 33 geführt ist, besteht. Der Dämpfungskolben 36 unterteilt den mit Dämpfungsflüssigkeit gefüllten Dämpferzylinder 33 in zwei Arbeitsräume 39, 40.

Das in diesem Ausführungsbeispiel zwischen dem Arbeitsraum 40 und einem nicht dargestellten Federspeicher einer Niveauregelanlage geschaltete Dämpfungsventilsystem 6 ist mit seinem Ventilgehäuse 5 mit geringem Achsabstand an der Außenwandung des Dämpferzylinders 33 angeordnet und weist zwei axiale Strömungsanschlüsse 14 und 15 auf, von denen der Strömungsanschluß 14 über ein durchströmbares Verbindungsteil 41 mit dem Schwingungsdämpfer verbunden ist und der Strömungsanschluß 15 auf den nicht dargestellten Federspeicher geführt ist.

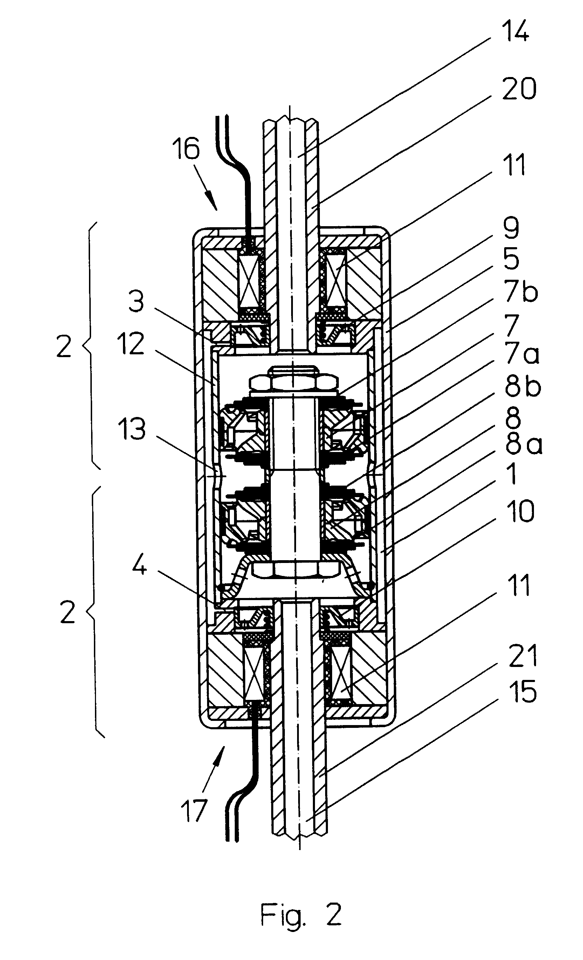

Das in Fig. 2 dargestellte Dämpfungsventilsystem besteht aus einem , aus einem Rohrabschnitt bestehenden Ventilgehäuse 5, in dem sich zwei koaxial gegeneinander angeordnete Dämpfungsventile 2 befinden. Jedes der Dämpfungsventile besteht aus einem elektromagnetisch ansteuerbaren, mit einem Durchlaß 3, 4 zusammenarbeitenden, axial beweglichen Steuerschieber 9, 10 und einem druckabhängigen Ventil 7, 8, wobei jedes der druckabhängigen Ventile 7, 8 aus zwei in entgegengesetzter Strömungsrichtung wirkenden Federscheibenventilen 7a, 7b, 8a, 8b besteht, die in Abhängigkeit des Dämpfungsflüssigkeitsdrucks mehr oder weniger öffnen. Die Steuerschieber 9, 10 werden jeweils über einen Elektromagneten 11 bewegt und sind so angeordnet, daß im stromlosen Zustand der Elektromagneten 11, die Durchlässe 3, 4 verschlossen sind und bei Ansteuerung geöffnet werden. Dadurch wird erreicht, daß bei einer Störung, z. B. Stromausfall oder Kabelbruch die Dämpfungskraft des Schwingungsdämpfers automatisch auf die härteste Dämpfungskraftkennlinie geschaltet wird.

Der Strömungskanal 1 zwischen den von den Steuerschiebern 9, 10 verstellbaren Durchlässen 3, 4 verläuft zwischen der Außenwandung eines im Ventilgehäuse 5 angeordneten Rohres 12 und der Innenwandung des Ventilgehäuses 5, wobei das Rohr 12 gleichzeitig den die druckabhängigen Ventile 7, 8 aufnehmenden Ventilinnenraum bildet. Der Strömungskanal 1 weist weiterhin zwischen den druckkabhängigen Ventilen 7,8 mindestens einen Durchlaß 13 zum Ventilinnenraum auf.

Die regelbare Verbindung zum Schwingungsdämpfer und bei Verwendung in einer Niveauregelung zur Niveauregeleinrichtung wird über die Strömungsanschlüsse 14, 15 hergestellt.Die Strömungsanschlüsse werden durch die an den Stirnseiten 16, 17 in das Dämpfungsventilsystem 6 eingeführten Rohrabschnitte 20, 21 gebildet, wobei in Fig. 1 sowohl die Elektromagneten 11 als auch die ringförmigen Steuerschieber 9, 10 um die Rohrabschnitte 20, 21 angeordnet sind. Die Strömungsanschlüsse 14, 15 enden im Ventilinnenraum und weisen damit eine direkte Verbindung zu dem jeweiligen druckabhängigen Ventil 7,8 und dem entsprechenden durch die Steuerschieber 9, 10 gesteuerten Durchlaß 3, 4 auf.

Im stromlosen Zustand der Elektromagneten 11 verschließen die Ventilschieber 9, 10 die Durchlässe 3, 4, die zum Beispiel durch den Strömungsanschluß 14 zuströmende Dämpfungsflüssigkeit fließt also nur über die in gleicher Richtung wirkenden Federscheibenventile 7a, 8a in den jetzt in Abströmrichtung wirkenden Strömungsanschluß 15. Wird der Durchlaß 3 durch den Steuerschieber 9 geöffnet und der Durchlaß 4 bleibt weiterhin geschlossen, gelangt die durch den Strömungsanschluß 14 einströmende Dämpfungsflüssigkeit über den Durchlaß 3 in den Strömungskanal 1 und über den Durchlaß 13 und das druckabhängige Ventil 8a in den Strömungsanschluß 15. Eine dritte Dämpfungskennlinie wird erzeugt, wenn der Steuerschieber 10 den Durchlaß 4 öffnet, der Durchlaß 3 jedoch geschlossen ist. Dann fließt die über den Strömungsanschluß 14 in das Dämpfungsventilsystem 6 einströmende Dämpfungsflüssigkeit über das druckabhängige Ventil 7a, den Durchlaß 13, den Strömungskanal 1, und den offenen Durchlaß 4 in den Strömungsanschluß 15.

Die weicheste Kennlinie wird erzeugt, wenn beide Elektromagneten 11 angesteuert werden und die Steuerschieber 9, 10 die Durchlässe 3 und 4 freigeben . Strömt die Dämpfungsflüssigkeit über den Strömungsansschluß 15 in das Dämpfungsventilsystem 6 ist die Funktionsweise entgegengesetzt.

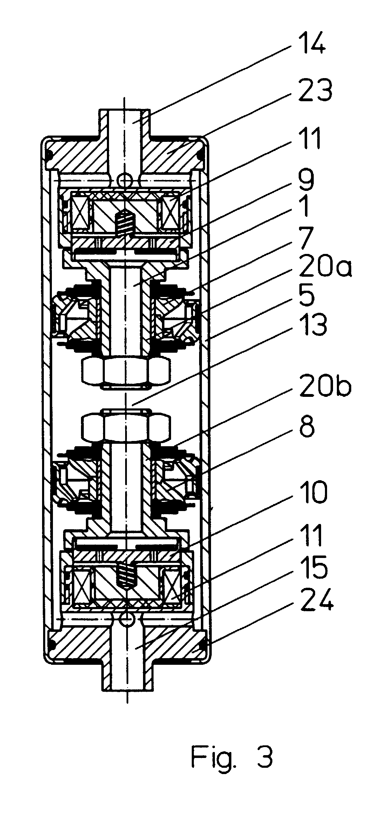

Eine andere Ausführungsform des Dämpfungsventilsystems ist in Fig. 3 dargestellt. Der Strömungskanal 1 ist hier durch ein im Ventilgehäuse 5 zwischen den von den Steuerschiebern 9, 10 verstellbaren Durchlässen 3,4 angeordnetes Rohr 20 gebildet, das zwischen den druckabhängigen Ventilen 7, 8 zur Bildung des Durchlasses 13 zum Ventilinnenraum 18 geteilt ist. Die Rohrteile 20a und 20b tragen gleichzeitig die druckabhängigen Ventile 7 und 8. Die Strömungsanschlüsse 14, 15 werden bei dieser Ausführungsform durch das eine Öffnung aufweisende Stirnteil 23, 24 des Ventilgehäuses 5 und die zwischen dem Gehäuse der Elektromagneten 11 und der Innenwandung des Ventilgehäuses 5 gebildeten Strömungskanälen gebildet.

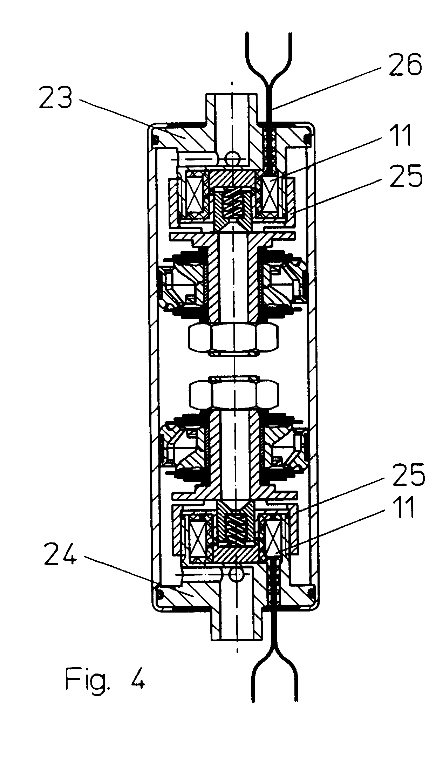

Eine Möglichkeit, wie bei der Ausführungsform nach Fig.3 die elektrischen Anschlüsse 26 der Elektromagneten 11 aus dem Dämpfungsventilsystem 6 herausgeführt werden können, zeigt Fig. 4. Die Stirnteile 23, 24 halten über das Gehäuse 25 die Elektromagneten 11 und die elektrischen Anschlüsse 26 sind durch die Stirnteile 23, 24 nach außen geführt.

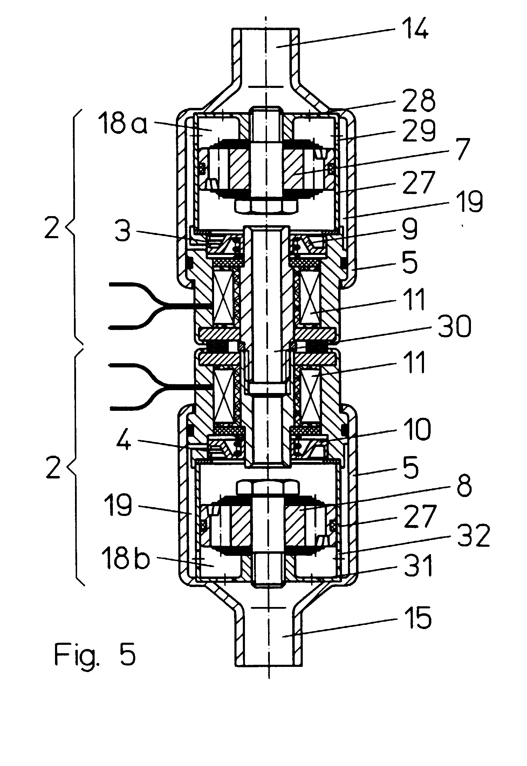

In der Ausführungsform nach Fig. 5 sind die Ventilschieber 9,10 und die Elektromagneten 11 koaxial gegeneinander axial innen und die druckabhängigen Ventile 7 und 8 axial außen im geteilten Ventilgehäuse 5 angeordnet und die druckabhängigen Ventile 7 und 8 befinden sich axial außen jeweils in einem durch ein Gehäuse 27 gebildeten Ventilinnenraum 18a und 18b. Zur Bildung der direkten Verbindung von den Strömungsanschlüssen 14 und 15 zu den jeweiligen druckabhängigen Ventilen 7 und 8 weisen die Gehäuse 27 mindestens eine Bohrung 28, 31 auf. Die direkte Verbindung von den Strömungsanschlüssen 14, und 15 zu den von den Steuerschiebern 9, 10 verstellbaren Durchlässen 3,4 wird über die Bohrungen 28 oder 31 im Gehäuse 27, mindestens eine weitere Bohrung 29 bwz. 32 und einem zwischen dem Gehäuse 27 und dem Ventilgehäuse 5 gebildeten Strömungskanal 19 gebildet. Ein Strömungskanal 30 schafft die Verbindung zwischen den beiden Dämpfungsventilen 2.

Sind die Durchlässe 3 und 4 durch die Ventilschieber 9 und 10 geschlossen, fließt die zum Bespiel über den Strömungsanschluß 14 einströmende Dämpfungsflüssigkeit über die Bohrung 28, das druckabhängige Ventil 7, den Strömungskanal 30, das druckabhängige Ventil 8 und die Bohrung 31 zum Strömungsanschluß 15 und erzeugt so die härteste Kennlinie. Eine weitere Dämpfungskraftlinie wird erzeugt, wenn der Ventilschieber 9 den Durchlaß 3 freigibt, dann fließt die Dämpfungsflüssigkeit über die Bohrung 28, den Ventilinnenraum 18a, die Bohrung 29, den Strömungskanal 19, den Durchlaß 3, den Strömungskanal 30 und über das druckabhängige Ventil 8 zum Strömungsanschluß 15. Öffnet der Ventilschieber 10 den Durchlaß 4, der Durchlaß 3 ist jedoch geschlossen, fließt die Dämpfungsflüssigkeit über das druckabhängige Ventil 7 den Strömungskanal 30, den Durchlaß 4, den Strömungskanal 19, die Bohrungen 32 und 31 zum Strömungsanschluß 15 und realisiert damit eine dritte Kennlinie. Die weicheste Kennlinie wird erzeugt, wenn beide Durchlässe 3 und 4 geöffnet sind, dann werden die druckabhängigen Ventile 7 und 8 überbrückt und die Dämfungsflüssigkeit fließt vom Strömungsanschluß 14 kommend über die offenen Durchlässe 3 und 4 zum Strömungsanschluß 15.

### Regelbarer Schwingungsdämpfer für Kraftfahrzeuge

- 1: Strömungskanal
- 2: Dämpfungsventil
- 3: Durchlaß
- 4: Durchlaß
- 5: Ventilgehäuse
- 6: Dämpfungsventilsystem
- 7: druckabhängiges Ventil
- 8: druckabhängiges Ventil
- 9: Steuerschieber
- 10: Steuerschieber
- 11: Elektromagnet
- 12: Rohr
- 13: Durchlaß
- 14: Strömungsanschluß
- 15: Strömungsanschluß
- 16: Stirnseite
- 17: Stirnseite
- 19: Strömungskanal
- 20: Rohr
- 23: Stirnteil
- 24: Stirnteil
- 25: Gehäuse
- 26: elektrische Anschlüsse
- 27: Gehäuse
- 28: Bohrung
- 29: Bohrung
- 30: Strömungsband
- 31: Bohrungen
- 32: Bohrungen
- 33: Dämpferzylinder
- 34: druckabhängiges Ventil
- 35: druckabhängiges Ventil
- 36: Dämpfungskolben
- 37: Kolbenstange
- 38: Führungs- und Dichtungseinheit
- 39: Arbeitsraum
- 40: Arbeitsraum
- 41: Verbindungsteil

## Patentansprüche

1. Regelbarer Schwingungsdämpfer für Kraftfahrzeuge, bestehend aus einem mit Dämpfungsflüssigkeit gefüllten Dämpferzylinder (33), in dem ein mit einer Kolbenstange (37) verbundener, mit druckabhängigen Ventilen (34; 35) für die Zug- und Druckstufe versehener Dämpfungskolben (36) gleitet, der den Dämpferzylinder (33) in zwei Arbeitsräume (39; 40) unterteilt, und der mit einem regelbaren äußeren Dämpfungsventilsystem (6) zur Einstellung der Dämpfungskraft des Schwingungsdämpfers versehen ist, das in Verbindung mit den druckabhängigen Ventilen (34; 35) am Dämpfungskolben (36) des Schwingungsdämpfers in Zug- und Druckstufe vier Kennlinien der Dämpfungskraft ermöglicht, wobei das mit mindestens zwei Strömungsanschlüssen (14; 15) versehene Dämpfungsventilsystem (6) Dämpfungsventile (2) aufweist, die aus je einem druckabhängigen Ventil (7; 8) für Zug- und Druckstufe und je einem elektromagnetisch ansteuerbaren, mit mindestens einem Durchlaß (3; 4) zusammenarbeitenden, axial beweglichen Steuerschieber (9; 10) bestehen, wobei die Dämpfungsventile (2) koaxial gegeneinander, in einem im wesentlichen zylinderförmigen Ventilgehäuse (5) angeordnet und über Strömungskanäle (1) miteinander verbindbar sind, **dadurch gekennzeichnet**, daß das Dämpfungsventilsystem (6) zwei axiale Strömungsanschlüsse für die Dämpfungsflüssigkeit (14; 15), die parallel zur Achse des Dämpferzylinders (33) verlaufen, aufweist, welche über die jeweilige Stirnseite (16; 17) des Ventilgehäuses (5) axial in das Dämpfungsventilsystem (6) geführt sind, und daß jeder der die Steuerschieber (9; 10) bewegenden Elektromagnete (11) axial zentral von dem jeweiligen Strömungsauschluß (14;15) oder einem mit dem jeweiligen Strömungsauschluß (14;15) verbundenen Strömungskanal (30) durchdrungen oder axial mantelförmig von einem Ringkanal zum Leiten der Dämpfungsflüssigkeit umgeben ist.

2. Schwingungsdämpfer nach Anspruch 1, **dadurch gekennzeichnet**, daß einer der Strömungsanschlüsse (14) eine direkte Verbindung zu einem der druckabhängigen Ventile (7) und einem der gesteuerten Durchlässe (3) und der weitere Strömungsanschluß (15) eine direkte Verbindung zu dem weiteren druckabhängigen Ventil (8) und dem weiteren gesteuerten Durchlaß (4) aufweist.

3. Schwingungsdämpfer nach Anspruch 1 oder 2, **dadurch gekennzeichnet**, daß die elektromagnetisch ansteuerbaren, mit mindestens einem Durchlaß (3; 4) zusammenarbeitenden, axial beweglichen Steuerschieber (9; 10) axial außen und die druckabhängigen Ventile (7; 8) axial innen im Ventilgehäuse (5) angeordnet sind.

4. Schwingungsdämpfer nach Anspruch 1 oder 2, **dadurch gekennzeichnet**, daß die elektromagnetisch ansteuerbaren, mit mindestens einem gesteuerten Durchlaß (3; 4) zusammenarbeitenden Steuerschieber (9; 10) axial innen und die druckabhängigen Ventile (7; 8) axial außen im Ventilgehäuse (5) angeordnet sind.

## Claims

1. Adjustable vibration damper for motor vehicles consisting of a damping cylinder (33) filled with damping fluid, in which damping cylinder slides a damping piston (36) which is connected to a piston rod (37) and provided with pressure-dependent valves (34;35) for the pull and push stage, which damping piston partitions the damping cylinder (33) into two working chambers (39;40) and the said damping piston being provided with an adjustable outer damping valve system (6) for the purpose of adjusting the damping force of the vibration damper, which damping valve system in conjunction with the pressure dependent valves (34;35) at the damping piston (36) of the vibration damper renders it possible in the pull and push stage to produce four characteristic curves of the damping force, wherein the damping valve system (6) provided with at least two flow connections (14;15) comprises damping valves (2) which consist in each case of a pressure-dependent valve (7,8) for the pull and push stage and in each case an electro-magnetically controllable, axially displaceable control slide (9;10) which cooperates with at least one orifice (3;4), wherein the damping valves (2) are disposed in a coaxial manner with respect to each other in a substantially cylindrical valve housing (5) and are interconnected by way of flow ducts (1), **characterised in that** the damping valve system (6) comprises for the damping fluid two axial flow connections (14;15) which extend in parallel with the axis of the damping cylinder (33) and which are routed via the respective end face (16;17) of the valve housing (5) in an axial manner into the damping valve system (6) and that each of the electromagnets (11) which move the control slides (9;10) is penetrated in an axial central manner by the respective flow connection (14;15) and/or one flow duct (30) connected to the respective flow connection (14,15) or is encompassed in an axial peripheral manner by an annular duct for the purpose of carrying the damping fluid.

2. Vibration damper according to claim 1, characterised in that one of the flow connections (14) comprises a direct connection to one of the pressure-dependent valves (7) and to one of the controlled orifices (3) and the further flow connection (15) comprises a direct connection to the further pressure-dependent valve (8) and to the further controlled orifice (4).

3. Vibration damper according to any one of claims 1 to 2, characterised in that the electro-magnetically controllable, axially displaceable control slides (9;10) which cooperate with at least one orifice (3;4) are disposed axially outside and the pressure-dependent valves (7;8) are disposed axially inside in the valve housing (5).

4. Vibration damper according to claim 1 or 2, characterised in that the electromagnetically controllable control slides (9;10) which cooperate with at least one controlled orifice (3;4) are disposed axially inside and the pressure-dependent valves (7;8) are disposed axially outside in the valve housing (5).

## Revendications

1. Amortisseur réglable pour véhicules, constitué d'un cylindre d'amortisseur (33) rempli d'un liquide d'amortissement, dans lequel coulisse un piston d'amortissement (36) relié à une tige de piston (37), doté de clapets (34; 35) actionnés par la pression, pour la course d'extension et pour la course de compression, le piston d'amortissement divisant le cylindre d'amortisseur (33) en deux chambres de travail (39; 40) et étant doté d'un système (6) extérieur, réglable de clapets d'amortissement pour l'ajustement de la force d'amortissement de l'amortisseur, ce système permettant, dans la course de traction et dans la course de compression, quatre caractéristiques de la force d'amortissement, en association avec les clapets (34; 35) actionnés par la pression disposés sur le piston d'amortissement (36) de l'amortisseur, tandis que le système de clapets d'amortissement (6) doté d'au moins deux raccords d'écoulement (14; 15), présente des clapets d'amortissement (2) qui sont constitués chacun d'un clapet (7; 8) actionné par la pression pour la course de traction et la course de compression, ainsi que d'un coulisseau de commande (9; 10) mobile axialement, commandé électromagnétiquement et coopérant avec au moins un passage (3; 4), les clapets d'amortissement (2) étant disposés coaxialement l'un par rapport à l'autre dans un logement (5) pour clapets de forme essentiellement cylindrique et pouvant être reliés l'un à l'autre par des canaux d'écoulement (1), caractérisé en ce que le système (6) de clapets d'amortissement présente deux raccords d'écoulement (14; 15) axiaux pour le liquide d'amortissement, qui s'étendent parallèlement à l'axe du cylindre d'amortissement (33), qui sont guidés axialement dans le système (6) de clapets d'amortissement, par les faces correspondantes (16; 17) du logement (5) pour clapets, et en ce que chacun des électroaimants (11) entraînant les coulisseaux de commande (9; 10) traverse axialement et centralement un raccord d'écoulement (14; 15) ou un canal d'écoulement (30) relié au raccord d'écoulement (14; 15) correspondant, ou est entouré axialement de manière enveloppante d'un canal annulaire pour conduire le liquide d'amortissement.

2. Amortisseur selon la revendication 1, caractérisé en ce que l'un des raccords d'écoulement (14) présente une liaison directe vers l'un des clapets (7) actionnés par la pression et l'un des passages commandés (3), et l'autre raccord d'écoulement (15) présente une liaison directe avec l'autre clapet actionné par la pression (8) et l'autre passage commandé (4).

3. Amortisseur selon la revendication 1 ou 2, caractérisé en ce que les coulisseaux de commande (9; 10) mobiles axialement, commandés électromagnétiquement, coopérant avec au moins un passage (3; 4) sont disposés axialement à l'extérieur, et les clapets (7; 8) actionnés par la pression sont disposés axialement à l'intérieur dans le logement de clapets (5).

4. Amortisseur selon la revendication 1 ou 2, caractérisé en ce que les coulisseaux de commande (9; 10), coopérant avec au moins un passage commandé (3; 4), sont disposés axialement à l'intérieur, et les clapets (7; 8) actionnés par la pression sont disposés axialement à l'extérieur dans le logement de clapets (5).
